# EUROPÄISCHE PATENTSCHRIFT

(11) **EP 0 687 866 B1**
(45) Veröffentlichungstag und Bekanntmachung des Hinweises auf die Patenterteilung: **07.04.1999**
(21) Anmeldenummer: 95107232.1
(22) Anmeldetag: 12.05.1995
(51) Int. Cl.: F24C 7/08, H05B 1/02, H05B 6/68

(54) **Ofen zur Wärmebehandlung von stückförmigen Lebensmitteln**
Oven for the heat treatment of solid foodstuffs
Four pour le traitement avec chaleur des aliments solides

(30) Priorität: 18.06.1994 DE 4421373
(43) Veröffentlichungstag der Anmeldung: 20.12.1995
(73) Patentinhaber: Wiesheu GmbH, 71563 Affalterbach (DE)
(72) Erfinder: Braun, Martin, D-73760 Ostfildern (DE)
(74) Vertreter: Gahlert, Stefan, Dr.-Ing.

(56) Entgegenhaltungen:
- GB-A- 2 071 887
- PATENT ABSTRACTS OF JAPAN, unexamined applications, M Section, Band 6, Nr. 167, 31. August 1982 THE PATENT OFFICE JAPANESE GOVERNMENT Seite 161 M 153; & JP-A-57 082 628 (TOKYO SHIBAURA)
- PATENT ABSTRACTS OF JAPAN, unexamined applications, M Section, Band 2, Nr. 87, 15. Juli 1978 THE PATENT OFFICE JAPANESE GOVERNMENT Seite 2388 M 78; & JP-A-53 055 538 (MATSUSHITA)
- PATENT ABSTRACTS OF JAPAN, unexamined applications, M Section, Band 3, Nr. 69, 14. Juni 1979 THE PATENT OFFICE JAPANESE GOVERNMENT Seite 37 M 62; & JP-A-54 044 244 (HITACHI)
- PATENT ABSTRACTS OF JAPAN, unexamined applications, M Section, Band 2, Nr. 132, 4. November 1978 THE PATENT OFFICE JAPANESE GOVERNMENT Seite 4332 M 78; & JP-A-53 101 144 (MATSUSHITA)

## Beschreibung

Die Erfindung betrifft einen Ofen zur Wärmebehandlung von stückförmigen Lebensmitteln, insbesondere zum Garen von Fleischstücken, mit einer Heizung zur Beheizung des Ofenraumes, mit einem Fühlerelement mit Temperatursensor zum Einstechen in das Gargut, dessen Temperatur-Signal einer Steuerelektronik des Ofens zur Steuerung dessen Heizung zuführbar ist.

Ein derartiger Ofen ist aus der WO-A-93 16 333 bekannt. Bei dem bekannten Ofen ist ein Temperatursensor zur Steuerung des Ofens vorgesehen, der an der Spitze eines in das Gargut einstechbaren Stabes vorgesehen ist, und dessen Signale über eine Anschlußleitung der Steuerung des Ofens zugeführt werden.

Obwohl sich mit einer derartigen Anordnung der Garvorgang beim Garen auch von größeren Fleischstücken außerordentlich präzise steuern läßt, weißt das verwendete Fühlerelement bestimmte Nachteile auf.

So werden die Anschlußleitungen zum Ofengehäuse im Alltagsgebrauch häufig beschädigt. Zwar läßt sich dem durch eine besonders stabile Ausführung des Fühlerelementes und der zugehörigen Anschlußleitung entgegenwirken, jedoch treten immer wieder Beschädigungen der Anschlußleitungen auf, die meist auf unsachgemäßen Gebrauch zurückzuführen sind.

Der Erfindung liegt die Aufgabe zugrunde, einen Ofen der eingangs genannten Art derart zu verbessern, daß das Fühlerelement auch den rauhen Beanstandungen im Langzeitbetrieb gewachsen ist und daß die Nachteile, die durch Beschädigung der Anschlußleitungen auftreten, weitgehend vermieden werden.

Erfindungsgemäß wird diese Aufgabe bei einem Ofen gemäß der eingangs genannten Art dadurch gelöst, daß das Fühlerelement einen Sender zur drahtlosen Übertragung eines vom Fühlerelement aufgenommenen Temperatursignals oder eines davon abgeleiteten Signals zu einem mit der Steuerelektronik des Ofens gekoppelten Empfänger umfaßt, und daß der Sender mit gekoppeltem Temperatur-sensor vollständig gekapselt im Bereich der Spitze des im wesentlichen rohrförmigen Fühlerelements angeordnet ist.

Erfindungsgemäß werden auf diese Weise Beschädigungen der Anschlußleitungen des Fühlerelementes zum Ofengehäuse vollständig ausgeschlossen, da auf solche Leitungen verzichtet wird. Das Fühlerelement selbst kann ausreichend stabil ausgeführt werden, um mechanischen Beschädigungen zu widerstehen, wobei auf Anschlußleitungen keinerlei Rücksicht mehr genommen werden muß. Ausreichend kleine, miniaturisierte Sender stehen grundsätzlich zur Verfügung und lassen sich ohne weiteres in das Fühlerelement gemeinsam mit einem zugehörigen Temperatur-Sensor vollständig gekapselt im Bereich der Spitze des rohrförmigen Fühlerelements integrieren.

Das grundsätzliche Problem, daß der Anwendungsbereich für derartige elektronische Schaltungen zur Zeit auf etwa 170 bis 180° C beschränkt ist, in Backöfen jedoch in der Regel höhere Temperaturen bis zu maximal etwa 250° C auftreten, wird erfindungsgemäß durch Anordnung des Senders im Bereich der Spitze umgangen. Erfindungsgemäß wurde nämlich erkannt, daß beim Einstechen des Fühlerelementes in das Gargut dessen Bereich an der Spitze durch das Gargut selbst vollständig ausreichend gekühlt wird, um eine thermische Beschädigung der elektronischen Komponente des Fühlerelementes zu vermeiden, sofern diese in dem Bereich angeordnet wird, der in das Gargut eingestochen wird. Hierbei kommt unterstützend die Tatsache zuhilfe, daß auch bei größeren Fleischstücken das Fühlerelement nicht beliebig in das Fleischstück eingestochen werden kann, sondern möglichst in den Kernbereich des Fleischstückes einzustechen ist, um insbesondere bei größeren Fleischstücken eine nicht ausreichende Garung im Kernbereich zu vermeiden. Aber selbst dann, wenn das Fühlerelement nicht ordnungsgemäß in den Kernereich eingestochen wird, sondern an anderer Stelle, so führt doch das Fleischstück zu einer ausreichenden Kühlwirkung, um eine Überhitzung der elektronischen Bauteile des Fühlerelementes zu vermeiden. Somit läßt sich der Sender des Fühlerelementes auch mit weniger aufwendigen Bauteilen aufbauen, die lediglich bis etwa 120 bis 130°C temperaturbeständig sind. Dadurch wird eine erheblich kostengünstigere Ausführung des erfindungsgemäßen Fühlerelementes ermöglicht. Insgesamt ergibt sich mit der Erfindung somit das Ergebnis, daß überraschenderweise in der Praxis eine Temperaturbegrenzung beim Einsatz des erfindungsgemäßen Kühlerelementes durch die maximale Ofentemperatur selbst nicht gegeben ist, sondern daß diese lediglich durch die maximal innerhalb des Gargutes auftretende Temperatur gegeben ist, in die die Spitze des Fühlerelementes eingestochen wird. Somit läßt sich auch unter Verwendung relativ einfacher elektronischer Bauelemente für den Sender eine zuverlässige und gleichzeitige kostengünstige Ausführung des Fühlerelementes verwirklichen.

Zwar ist es grundsätzlich bekannt, bei einem Mikrowellenherd einen Temperaturfühler in das Gargut einzuführen, der einen mit einem Temperatursensor gekoppelten Sender enthält, dessen Temperatursignale drahtlos auf einen Empfänger übertragen werden (vergleiche Patent Abstract of Japan, unexamined applications, M section, Band 3, Nr. 69, 14.06.1979, the Patent Office Japanese Government, Seite 137 M62, JP-A-54 044 254), jedoch ist hierdurch die Erfindung nicht nahegelegt, da der bekannte Temperaturfühler nur für die Anwendung bei Mikrowellenherden geeignet ist, da dort die Wärme nur im Innern des wasserhaltigen Gargutes erzeugt wird und der Ofenraum kalt bleibt.

Grundsätzlich kann der erfindungsgemäß verwendete Sender beliebiger Bauart sein, sofern nur eine ausreichend zuverlässige Übertragung der Daten zum Empfänger ermöglicht wird, der vorzugsweise nicht innerhalb des Ofenraums, sondern innerhalb des Ofengehäuses, thermisch isoliert vom Ofenraum angeordnet ist.

Sofern der Sender als Funksender ausgebildet ist, muß natürlich eine ausreichende Übertragung der Funkwellen aus dem Inneren des Fleischstückes heraus über den Ofenraum bis hin zum Sender gewährleistet sein.

Hierzu ist es in der Regel erforderlich, sofern die Auskleidung des Ofengehäuses, wie bei herkömmlichen Öfen vielfach üblich, aus Edelstahl besteht, zumindest in dem Bereich, in dem der Empfänger angeordnet ist, aus einem elektrisch nicht leitfähigen Material, wie etwa Glas oder Kunststoff auszubilden. Hierzu kann beispielsweise in eine Ofenwand, die aus Edelstahl besteht, eine entsprechende Öffnung mit einem Glaseinsatz vorgesehen sein, hinter dem wärmemäßig isoliert der Empfänger angeordnet ist.

Sofern der Sender als Ultraschallsender ausgebildet ist, ist die Übertragung der aufgenommenen Temperatursignale aus dem Inneren des Gargutes besonders vereinfacht, da sich Ultraschallwellen auch innerhalb von Fleischstücken leicht fortsetzen können, so daß eine spezielle Ausführung mit einer Antenne nicht erforderlich ist.

Schließlich kann auch die Ausführung des Senders als optischer Sender besondere Vorteile besitzen, sofern die Ausführung als optischer Sender nicht allzu teuer ist und auch die Herausführung der Signale von der Spitze des Fühlerelementes aus dem Kernbereich des Gargutes heraus bis an die Oberfläche des Gargutes in zuverlässiger und relativ preiswerter Weise gelöst wird, wie etwa durch die Verwendung von Lichtleitern mit Streuelementen am äußeren Bereich des Fühlerelementes, der aus dem Gargut heraussteht. Eine Ausführung als optischer Sender bietet besondere Vorzüge infolge der hohen Zuverlässigkeit und Störungsunanfälligkeit gegenüber anderen elektromagnetischen Wellen.

Eine besonders hohe Zuverlässigkeit der drahtlosen Übertragung eines vom Fühlerelement aufgenommenen Temperatursignals wird dann erreicht, wenn dieses zunächst über einen Analog/Digitalwandler umgesetzt wird, bevor die Übertragung vom Sender zum Empfänger erfolgt.

Eine besonders hohe Zuverlässigkeit der drahtlosen Übertragung eines vom Fühlerelement aufgenommenen Temperatursignals wird dann erreicht, wenn dieses zunächst über einen Analog/Digitalwandler umgesetzt wird, bevor die Übertragung vom Sender zum Empfänger erfolgt.

Um dem Bediener das Einstechen des Fühlerelementes bis in den Kernbereich zu erleichtern, können am Fühlerelement entsprechende Markierungen oder vorzugsweise ein Anschlag vorgesehen sein.

Der Anschlag ist in einer vorteilhaften Weiterbildung der Erfindung verstellbar ausgebildet, um so für verschiedene Arten von Gargut (z.B. Roastbeef, Kassler, Schweineschulter usw.) bereits optimale Einstechtiefen vorzugeben.

In weiter vorteilhafter Ausgestaltung kann hierzu der Anschlag auf dem Fühlerelement verrastbar angeordnet sein.

Um bei großen Fleischstücken das Einstechen des Fühlerelementes bis in die notwendige Tiefe zu erleichtern, ist es bei einer weiteren Ausführung der Erfindung vorgesehen, daß das Fühlerelement zumindest einen Teilbereich mit einem korkenzieherartigen Abschnitt umfaßt.

Hierdurch wird auch bei sehr großen Fleischstücken ein einfaches und genaues Einbringen des Fühlerelementes mit seiner Spitze bis in den Kernbereich des Gargutes ermöglicht.

Gemäß einer weiteren vorteilhaften Ausführung der Erfindung weist das Fühlerelement einen im wesentlichen rohrförmigen Gehäuseabschnitt auf, dessen vorderer Bereich als Spitze ausgebildet ist, wobei der Sender als auch ein mit dem Sender gekoppelter Temperatursensor im Bereich der Spitze angeordnet sind.

Somit ist einerseits eine ausreichende Kühlung der Elektronikbauteile innerhalb des Fühlerelementes durch das umgebende Gargut gewährleistet, andererseits läßt sich ein besonders zuverlässiger Aufbau des Fühlerelementes dadurch realisieren, daß der rohrförmige Gehäuseabschnitt aus Metall, vorzugsweise aus Edelstahl, besteht.

Gemäß einer weiteren Ausgestaltung der Erfindung weist das Fühlerelement zumindest ein zweiteiliges Gehäuse auf, das zum Zwecke eines Batteriewechsels geöffnet werden kann.

Da das Fühlerelement für den Langzeitbetrieb ausgelegt ist, läßt sich so auf einfache Weise ein erforderlicher Batteriewechsel durchführen, beispielsweise indem ein Gehäuseteil vom anderen Gehäuseteil abgeschraubt wird. Dabei kann beispielsweise der Sender zusammen mit dem Temperatursensor vollständig gekapselt innerhalb der Spitze des Fühlerelementes vorgesehen sein, während das Batterieelement im gegenüberliegenden Bereich des zweiten Gehäuseabschnittes angeordnet ist, der mit dem ersten Gehäuseabschnitt verschraubbar ist. Dabei ist zweckmäßigerweise zusätzlich eine Dichtung zur Abdichtung des Batterieeinsatzes nach außen hin vorgesehen, und die Schraubverbindung ist so gestaltet, daß bei vollständig verschraubten Gehäuseabschnitten die elektrische Verbindung vom Batterieelement in einem Gehäuseabschnitt zum Sender im anderen Gehäuseabschnitt hergestellt ist.

Weitere Merkmale und Vorteile der Erfindung ergeben sich aus der nachfolgenden Beschreibung bevorzugter Ausführungsbeispiele unter Bezugnahme auf die Zeichnung. Darin zeigen:
- Fig. 1: einen schematischen Querschnitt durch einen Ofen herkömmlicher Bauart;
- Fig. 2: einen schematischen Querschnitt durch einen erfindungsgemäßen Ofen;
- Fig. 3: einen Längsschnitt durch ein erfindungsgemäßes Fühlerelement in vergrößerter, schematischer Darstellung;
- Fig. 4: eine Abwandlung des Fühlerelementes gemäß Fig. 3 im Längsschnitt;
- Fig. 5: eine Seitenansicht eines erfindungsgemäßen Fühlerelementes gemäß einer weiteren Ausführung der Erfindung und
- Fig. 6: einen Längsschnitt einer weiteren Abwandlung eines erfindungsgemäßen Fühlerelementes.

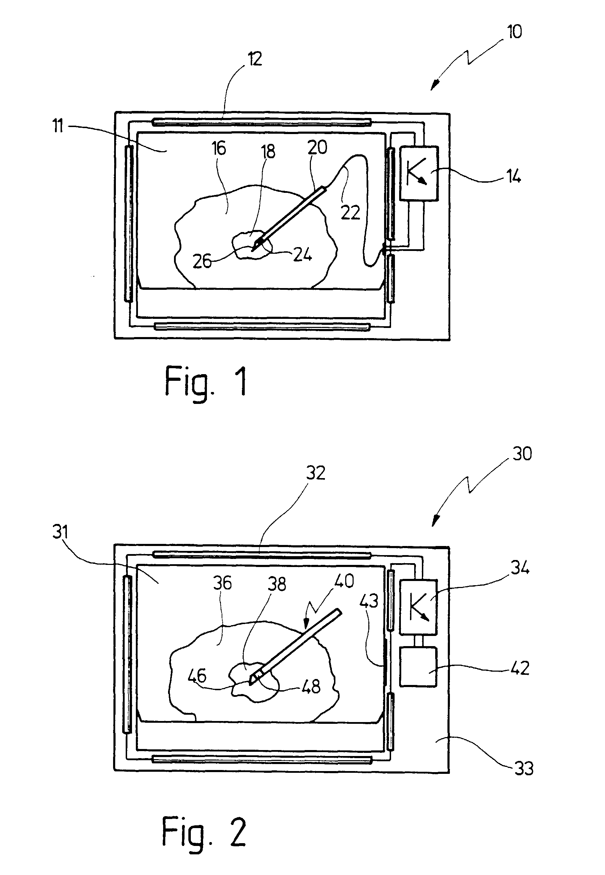

Ein herkömmlicher Ofen ist in Fig. 1 insgesamt mit der Ziffer 10 bezeichnet. Der Ofen 10 weist einen Ofenraum oder Garraum 11 auf, der durch Heizelemente 12 beheizt ist, die über eine Steuerelektronik 14 gesteuert sind. Innerhalb des Ofenraumes 11 ist ein über eine Verbindungsleitung 22 fest mit dem Ofen verbundenes Fühlerelement 20 vorgesehen, das mit seiner Spitze 26, in der ein Temperatur-Sensor 24 vorgesehen ist, bis in den Kernbereich 18 des Gargutes 16 (in der Regel ein Fleischstück) einstechbar ist.

Die Heizung 12 wird über die Steuerelektronik 14 derart gesteuert, daß eine vorgegebene Temperatur innerhalb des Kernbereiches 18 des Gargutes 16 über einen vorgewählten Zeitraum eingehalten wird. In der Regel liegt die Kerntemperatur während des Garvorganges in der Größenordnung von etwa 70°C.

In Fig. 2 ist ein erfindungsgemäßer Ofen insgesamt mit der Ziffer 30 bezeichnet. Auch hierbei ist ein Fühlerelement 40 vorgesehen, das in das Gargut 36 mit seiner Spitze 46 einstechbar ist, um über einen im Bereich der Spitze 46 vorgesehenen Temperatursensor 44 die Temperatur des Kernbereiches 38 des Gargutes 36 zu erfassen und um die Heizung 32 über die Steuerelektronik 34 in Abhängigkeit von dem aufgenommenen Temperatursignal zu steuern. Das erfindungsgemäße Fühlerelement 40 ist im Gegensatz zu der zuvor anhand der Fig. 1 beschriebenen Ausführung nicht drahtgebunden ausgebildet, sondern ermöglicht eine drahtlose Übertragung eines Temperatursignals bzw. eines davon abgeleiteten Signals zu einem Empfänger 42, der innerhalb des Ofengehäuses 33 angeordnet ist und mit der Steuerelektronik 34 elektrisch gekoppelt ist, um die Heizung 32 in Abhängigkeit von der über den Temperatursensor 48 aufgenommenen Temperatur im Kernbereich 38 des Gargutes 36 zu steuern. Um eine Wärmeisolation des Empfängers 42 gegen die im Ofenraum 31 herrschenden Temperaturen von bis zu 250°C zu erreichen, ist der Empfänger 42 nicht im Ofenraum 31 sondern im Ofengehäuse 33 angeordnet und in der vor dem Empfänger 42 liegenden Innenwand des Ofengehäuses 33, das aus Edelstahl besteht, befindet sich ein Glaseinsatz 43, um eine Übertragung elektromagnetischer Wellen zum Empfänger 42 zu ermöglichen.

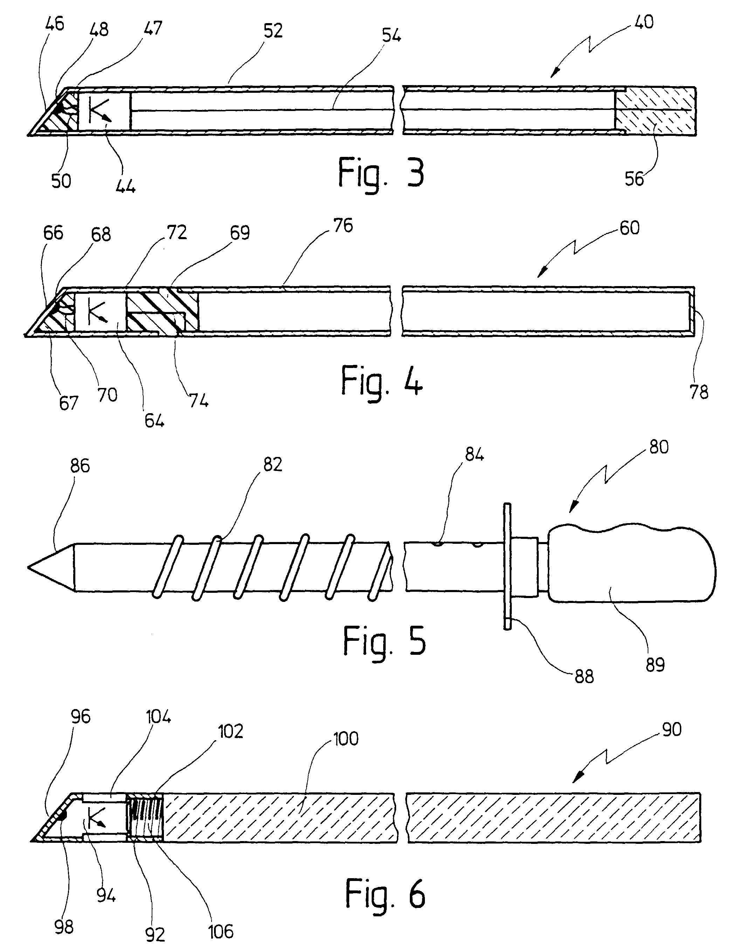

Verschiedene Alternativen eines möglichen Aufbaus des Fühlerelementes sind in den Fig. 3 bis 6 dargestellt.

Eine erste Ausführung des erfindungsgemäßen Fühlerelementes ist in Fig. 3 insgesamt mit der Ziffer 40 bezeichnet. Das Fühlerelement 40 besitzt eine zylindrische Form und ist an seinem vorderen Ende zur Bildung einer Spitze 46 einseitig abgeschrägt. Das Fühlerelement 40 wird von einem rohrförmigen Gehäuseabschnitt 52 aufgenommen, der aus einem Metallrohr, vorzugsweise aus Edelstahl besteht, an seinem vorderen Ende zur Bildung der Spitze 46 abgeschrägt ist und an seinem hinteren, der Spitze 46 gegenüberliegenden Ende durch einen zylindrischen Stopfen 56 aus einem elektrisch isolierenden Material abgeschlossen ist.

An der Innenseite der Spitze 46 ist ein Temperatursensor 48 vorgesehen, der als Thermoelement oder auch als Halbleiter-Temperatursensor ausgebildet sein kann und über Anschlußleitungen 50 mit einem miniaturisierten Sender 44 verbunden ist, der in dem sich unmittelbar an die Spitze 46 anschließenden Bereich des rohrförmigen Gehäuseabschnittes 52 angeordnet ist. Der Temperatursensor 48 und der als Funksender ausgebildete Sender 44 sind vorzugsweise am vorderen Ende des rohrförmigen Gehäuseabschnittes 52 vollständig gekapselt angeordnet. Als Isolierwerkstoff 47 kann hierzu eine Vergußmasse, beispielsweise ein Epoxidharz vorgesehen sein, ggf. kann auch ein thermisch noch höher belastbarer Isolierwerkstoff verwendet werden.

Der Sender 44 weist eine Antenne 54 auf, die sich bis in den Stopfen 56 hinein erstreckt, um so auch eine Abstrahlung außerhalb des metallischen rohrförmigen Gehäuseabschnittes 52 und damit außerhalb des Gargutes zu ermöglichen. Hierzu kann auch die Antenne lediglich im Bereich des Stopfens 56 ausgebildet sein und in an sich bekannter Weise elektrisch an den Sender 44 angekoppelt sein. Der Stopfen 56 besteht aus einem temperaturfesten Kunststoffmaterial, das bis etwa 300°C beständig ist oder aber aus einem Keramikwerkstoff, wie z.B. Aluminiumoxid.

Im Betrieb wird das Fühlerelement 40 in das Gargut 36 eingestochen und wird im Bereich seiner Spitze 46 lediglich bis auf Kerntemperatur, d.h. bis auf etwa 70°C erwärmt oder aber, wenn das Fühlerelement 40 nicht korrekt in den Kernbereich 38 des Gargutes 36 eingestochen wird, bis auf Temperaturen von maximal im Bereich von etwa 100°C. Solchen Temperaturen können die elektronischen Bauteile des Funksenders 44, der Temperatursensor 48, der Isolierwerkstoff 47 und die im Sender 44 integrierten Batterieelemente (nicht dargestellt) ohne weiteres auch im Langzeitbetrieb ausgesetzt sein. Der rohrförmige Gehäuseabschnitt 52 besteht zwar aus hygienischen Gründen aus Edelstahl, wird jedoch durch das umgebende Gargut ausreichend gekühlt, um eine zu starke Aufheizung im Bereich der Spitze 46 zu vermeiden. Lediglich das hintere Ende des rohrförmigen Gehäuseabschnittes 52 und der Stopfen 56 sind der hohen Temperatur im Ofenraum 31 von bis zu etwa 250°C ausgesetzt. Die Antenne 54 bzw. der Anschlußdraht zu einer im Stopfen 56 vorgesehenen Antenne sind aus einem ausreichend dünnen und ggf. schlecht wärmeleitfähigen Draht gefertigt, um eine zu starke Aufheizung des Senders 44 über den Stopfen 56 von außen zu vermeiden.

Eine leicht gegenüber der Ausführung gemäß der Fig. 3 abgewandelte Ausführung des erfindungsgemäßen Fühlerelementes ist in Fig. 4 insgesamt mit der Ziffer 60 bezeichnet.

Das Fühlerelement 60 weist einen ersten rohrförmigen Gehäuseabschnitt 72, der vorzugsweise aus Edelstahl besteht, auf, dessen vorderes Ende wieder zur Bildung einer Spitze 66 wie zuvor beschrieben, einseitig abgeschrägt ist. Wiederum ist an der Innenseite der Spitze 66 der Temperatursensor 68 angeordnet, der über Anschlußdrähte 70 mit dem Funksensor 44 verbunden ist, der in unmittelbarer Nachbarschaft der Spitze 66 innerhalb des ersten rohrförmigen Gehäuseabschnittes 72 angeordnet ist und mittels eines Isolierwerkstoffes 67 vorzugsweise vollständig vergossen ist. Der wesentliche Unterschied zur zuvor genannten Ausführung besteht darin, daß sich an dem ersten rohrförmigen Gehäuseabschnitt 72 kurz hinter dem Sender 64 ein zweiter rohrförmiger Gehäuseabschnitt 76 anschließt, der vorzugsweise gleichfalls aus Edelstahl besteht, jedoch elektrisch isolierend durch ein Zwischenstück 69 mit dem ersten rohrförmigen Gehäuseabschnitt 72 verbunden ist. Der zweite rohrförmige Gehäuseabschnitt 76 ist an seinem hinteren, der Spitze 66 gegenüberliegenden Ende 78 auch stirnseitig vollständig geschlossen. Der zweite rohrförmige Gehäuseabschnitt 76 ist durch eine Anschlußleitung 74 mit dem Sender 64 verbunden und elektrisch als Antenne angekoppelt. Das Zwischenstück 69 kann wiederum aus einem Vergußwerkstoff oder auch aus einem Keramikwerkstoff bestehen.

Dabei kann auch die elektrische Verbindung zwischen der Anschlußleitung 74 und dem zweiten rohrförmigen Gehäuseabschnitt 76 als Klemmverbindung ausgelegt sein.

Eine weitere Ausführungsform des erfindungsgemäßen Fühlerelementes ist in Fig. 6 dargestellt und insgesamt mit der Ziffer 90 bezeichnet. Der Sender 94 ist hierbei im Gegensatz zu den zuvor beschriebenen Ausführungen als Ultraschallsender ausgebildet und umfaßt Piezoelemente 104 mittels derer eine seitliche Abstrahlung unmittelbar in das Gargut erfolgt. Grundsätzlich ist auch hierbei wieder der gleiche äußere Aufbau vorhanden, so daß das Fühlerelement 90 insgesamt eine rohrförmige Form aufweist und an seinem vorderen Ende zu einer Spitze 96 einseitig abgeschrägt ist. Der Sender 94 ist wiederum in unmittelbarer Nachbarschaft der Spitze 96 am vorderen Ende eines rohrförmigen Gehäuseabschnittes 92 angeordnet und mit einem Temperatursensor 98 an der Innenseite der Spitze 96 verbunden.

Da der Sender 94 seitlich über die Piezogeber 104 unmittelbar in das Gargut abstrahlt, ist die Ausbildung einer Antenne wie bei den zuvor beschriebenen Ausführungen nicht erforderlich. Der rohrförmige Gehäuseabschnitt 92 kann daher durch einen zylindrischen Stab 100 verschlossen sein, der vorzugsweise mit dem rohrförmigen Gehäuseabschnitt 92 verschraubbar ist, um einen einfachen Batteriewechsel zu ermöglichen, wozu das der Spitze 96 abgewandte Ende des rohrförmigen Abschnittes 92 ein Innengewinde 102 aufweist, in das der Stab 100 mit einem entsprechenden Außengewindeabschnitt 106 einschraubbar ist. Es versteht sich, daß das oder die Batterieelemente (nicht dargestellt) entweder unmittelbar in den Sender 94 beispielsweise mit einem entsprechenden Schraubverschluß integriert sein können oder aber auch in den Stab 100, sofern die elektrische Verbindung beim Verschrauben automatisch hergestellt wird.

In jedem Falle wird durch entsprechende Dichtungselemente, z. B. Silikonringe, eine sichere Abdichtung der miteinander verschraubbaren Gehäuseteile nach außen sichergestellt. Der Stab 100 kann aus Keramikmaterial bestehen oder aber wie auch bei den zuvor bereits beschriebenen Ausführungen als Edelstahlrohr mit einem geschlossenen Ende ausgebildet sein.

Es versteht sich, daß entsprechende Möglichkeiten zum Batteriewechsel auch bei den zuvor anhand der Figuren 3 und 4 beschriebenen Ausführungen vorgesehen sein können.

Eine weitere Abwandlung des erfindungsgemäßen Fühlerelementes, die im wesentlichen den äußeren mechanischen Aufbau betrifft, ist in Fig. 5 dargestellt und insgesamt mit der Ziffer 80 bezeichnet.

Auch hierbei weist das Fühlerelement 80 wiederum die Grundform eines zylindrischen Stabes auf, besitzt jedoch an seinem vorderen Ende eine kegelförmige Spitze 86. Ferner ist ein Teilbereich des Fühlerelementes 80 als korkenzieherartiger Abschnitt 82 ausgebildet, um ein "Einschrauben" des Fühlerelementes 80 in das Gargut zu ermöglichen. Hierzu ist an dem der Spitze 86 gegenüberliegenden Ende ein Griffteil 89 vorgesehen, um die Handhabung zu erleichtern. Zusätzlich ist ein Anschlag 88 auf dem Fühlerelement 80 vorgesehen, der als in Axialrichtung verschiebbarer Flansch ausgebildet ist und in Rastvertiefungen 84 des Fühlerelementes 80 in verschiedenen Axialpositionen verrastbar ist, um für unterschiedliche Fleischstücke für den Benutzer eine optimale Einstechtiefe vorgeben zu können. Im übrigen entspricht der Aufbau des Fühlerelementes 80 einer der zuvor anhand der Figuren 3, 4 und 6 erläuterten Ausführungen.

## Patentansprüche

1. Ofen (30) zur Wärmebehandlung von stückförmigen Lebensmitteln (36), insbesondere zum Garen von Fleischstücken (36), mit einer Heizung (32) zur Beheizung des Ofenraums (31), mit einem Fühlerelement (40, 60, 80, 90) mit Temperatursensor (48, 68, 98 zum Einstechen in das Gargut (36), dessen Temperatursignal einer Steuerelektronik (34) des Ofens zur Steuerung dessen Heizung (32) zuführbar ist, dadurch gekennzeichnet, daß das Fühlerelement (40, 60, 80, 90) einen Sender (44, 64, 94) zur drahtlosen Übertragung eines vom Fühlerelement (40, 60, 80, 90) aufgenommenen Temperatursignals oder eines davon abgeleiteten Signals zu einem mit der Steuerelektronik (34) des Ofens (30) gekoppelten Empfänger (42) umfaßt, und daß der Sender mit gekoppeltem Temperatursensor (48, 68, 98) vollständig gekapselt im Bereich der Spitze des im wesentlichen rohrförmigen Fühlerelements (40, 60, 80, 90) angeordnet ist.

2. Ofen nach Anspruch 1, dadurch gekennzeichnet, daß der Sender ein Funksender (44, 64), ein Ultraschallsender (94) einer ein optischer Sender ist.

3. Ofen nach Anspruch 1 oder 2, dadurch gekennzeichnet, daß das Fühlerelement (80) einen Anschlag (88) zur Begrenzung der Einstechstiefe in das Gargut (36) aufweist.

4. Ofen nach Anspruch 3, dadurch gekennzeichnet, daß der Anschlag (88) verstellbar ist.

5. Ofen nach Anspruch 3 oder 4, dadurch gekennzeichnet, daß der Anschlag (88) auf dem Fühlerelement (80) verrastbar angeordnet ist.

6. Ofen nach einem oder mehreren der vorhergehenden Ansprüche, dadurch gekennzeichnet, daß das Fühlerelement (80) zumindest einen Teilbereich mit einem korkenzieherartigen Abschnitt (82) umfaßt.

7. Ofen nach einem oder mehreren der vorhergehenden Ansprüche, dadurch gekennzeichnet, daß der Sender (44) als Funksender ausgebildet ist, daß der rohrförmige Gehäuseabschnitt (52) aus Metall besteht, und daß die Antenne (54) des Senders durch den rohrförigen Abschnitt (52) hindurch bis in einen Stopfen (56) geführt ist, der den rohrförmigen Abschnitt (52) verschließt und der aus einem elektrisch isolierenden Material besteht.

8. Ofen nach einem oder mehreren der Ansprüche 1 bis 6, dadurch gekennzeichnet, daß der Sender (44, 64) als Funksender ausgebildet ist, und daß der rohrförmige Gehäuseabschnitt (52, 72) aus Metall besteht und als Antenne des Senders (44, 64) ausgeführt ist.

9. Ofen nach nach einem oder mehreren der Ansprüche 1 bis 6, dadurch gekennzeichnet, daß der Sender (64) als Funksender ausgeführt ist, und daß zumindest ein zweiter, der Spitze (66) abgewandter Gehäuseabschnitt (76) vorgesehen ist, der aus Metall besteht und als Antenne des Senders (64) ausgeführt ist.

10. Ofen nach einem oder mehreren der Ansprüche 1 bis 6, dadurch gekennzeichnet, daß der Sender (94) als Ultraschallsender (104) ausgeführt ist, der zumindest einen Piezogeber (104) umfaßt, der im Bereich der Spitze (96) des rohrförmigen Abschnittes (92) angeordnet ist.

11. Ofen nach einem oder mehreren der vorhergehenden Ansprüche, dadurch gekennzeichnet, daß das Fühlerelement (90) zumindest ein zweiteiliges Gehäuse (92, 100) aufweist, das zum Zwecke eines Batteriewechsels geöffnet werden kann.

## Claims

1. Oven (30) for the heat treatment of pieces of food (36), in particular for the cooking of joints of meat (36), with a heating unit to heat the oven space (31), a sensor element (40,60,80,90) with temperature sensor (48,68,98) to insert into the food (36), the temperature of which can be sent to an electronic control unit (34) of the oven to control the heating element (32) thereof, characterised in that the sensor element (40,60,80,90) comprises a transmitter (44,64,94) to transmit wirelessly a signal picked up by the sensor element (40,60,80,90) or a signal derived therefrom this, to a receiver (42) connected to an electronic control unit (34) of the oven (3) and that the transmitter is arranged fully encapsulated with the connected temperature sensor (48,68,98) in the region of the tip of the substantially tubular sensor element (40,60,80 90).

2. Oven according to Claim 1, characterised in that the transmitter is a radio transmitter (44,64), an ultra-sound transmitter (94) or an optical transmitter.

3. Oven according to Claims 1 or 2, characterised in that the sensor element (80) has a stop (88) to restrict the depth of insertion in the food (36).

4. Oven according to Claim 3, characterised in that the stop (88) is adjustable.

5. Oven according to Claim 3 or 4, characterised in that the stop (88) is arranged for catching in the sensor element (80).

6. Oven according to one or more of the preceding claims, characterised in that the sensor element (80) surrounds at least a region with a corkscrew-like portion (82).

7. Oven according to one or more of the preceding claims, characterised in that the transmitter (44) is designed as a radio transmitter, that the tubular housing portion (52) consists of metal and that the aerial (52) of the transmitter is passed through the tubular portion (52) into a stopper (56) which seals the tubular portion (52) and consists of a material with electrical insulating properties.

8. Oven according to one or more of Claims 1 to 6, characterised in that the transmitter (44,64) is designed as a radio transmitter and that the tubular housing portion (52,72) consists of metal and is designed as an aerial of the transmitter (44,64) .

9. Oven according to one or more of Claims 1 to 6, characterised in that the transmitter (64) is designed as a radio transmitter, and that at least a second housing portion (76) is provided which is turned away from the tip (66), consisting of metal and is designed as an aerial of the transmitter (64).

10. Oven according to one or more of Claims 1 to 6, characterised in that the transmitter (94) is designed as an ultrasound transmitter (104) which comprises at least one piezo transmitter (104) arranged in the region of the tip (96) of the tubular portion (92).

11. Oven according to one or more of the preceding claims, characterised in that the sensor element (90) has at least one two-part housing (92,100) which can be opened for the purpose of changing a battery.

## Revendications

1. Four (30) destiné au traitement thermique de produits alimentaires (36) en morceaux, destiné en particulier à faire cuire des morceaux de viande (36), comportant un dispositif de chauffage (32) destiné à chauffer l'enceinte (31) du four, comportant un élément à palpeur (40, 60, 80, 90) avec sonde de température (48, 68, 98) à enfoncer dans le produit à cuire (36) dont le signal de température peut être envoyé à une électronique de commande (34) du four en vue de la commande de son dispositif de chauffage (32), caractérisé en ce que l'élément à palpeur (40, 60, 80, 90) comprend un émetteur (64, 94) pour la transmission sans fil d'un signal de température reçu de l'élément à palpeur (40, 60, 80, 90) ou d'un signal dérivé de celui-ci, à un récepteur (42) accouplé à l'électronique de commande (34) du four (30), et en ce que l'émetteur avec sonde de température (48, 68, 98) accouplée est disposé, totalement blindé, dans la région du sommet de l'élément à palpeur (40, 60, 80, 90) sensiblement tubulaire.

2. Four selon la revendication 1, caractérisé en ce que l'émetteur est un émetteur radio (44, 64), un émetteur à ultrasons (94) ou un émetteur optique.

3. Four selon la revendication 1 ou 2, caractérisé en ce que l'élément à palpeur (80) présente une butée (88) destinée à limiter la profondeur d'enfoncement dans le produit à cuire (36).

4. Four selon la revendication 3, caractérisé en ce que la butée (88) est réglable.

5. Four selon la revendication 3 ou 4, caractérisé en ce que la butée (88) est disposée encliquetable sur l'élément à palpeur (80).

6. Four selon une ou plusieurs des revendications précédentes, caractérisé en ce que l'élément à palpeur (80) comprend au moins une zone partielle avec une portion (82) du type tire-bouchon.

7. Four selon une ou plusieurs des revendications précédentes, caractérisé en ce que l'émetteur (4) est réalisé en tant qu'émetteur radio, en ce que la portion de boîtier (52) tubulaire est en métal, et en ce que l'antenne (54) de l'émetteur passe à travers la portion tubulaire (52) jusque dans un bouchon (56), qui ferme la portion tubulaire (52) et qui est constitué d'un matériau électriquement isolant.

8. Four selon une ou plusieurs des revendications 1 à 6, caractérisé en ce que l'émetteur (44, 64) est réalisé en tant qu'émetteur radio et en ce que la portion de boîtier tubulaire (52, 72) est en métal et est réalisée en tant qu'antenne de l'émetteur (44, 64).

9. Four selon une ou plusieurs des revendications 1 à 6, caractérisé en ce que l'émetteur (64) est réalisé en tant qu'émetteur radio et en ce qu'est prévue au moins une deuxième portion de boîtier (76) tournée à l'opposé de la pointe (66), portion qui est en métal est qui est réalisée en tant qu'antenne de l'émetteur (64).

10. Four selon une ou plusieurs des revendications 1 à 6, caractérisé en ce que l'émetteur (94) est réalisé en tant qu'émetteur à ultrasons (104), qui comprend au moins un transmetteur piézo-électrique (104), qui est disposé dans la région de la pointe (96) de la portion tubulaire (92).

11. Four selon une ou plusieurs des revendications précédentes, caractérisé en ce que l'élément à palpeur (90) comporte au moins un boîtier (92, 100) en deux parties, qui peut être ouvert afin de changer une batterie.
